Europäisches Patentamt

(19) European Patent Office

Office européen des brevets

(11) Publication number : **0 170 461**
**B1**

# (12) EUROPEAN PATENT SPECIFICATION

(45) Date of publication of patent specification :
10.02.88

(21) Application number : 85305042.5

(22) Date of filing : 15.07.85

(51) Int. Cl.⁴ : **B 65 D 81/34**, D 21 H 3/02,
D 21 D 3/00

(54) Infusion bag material treatment with fluoro-chemical sizing agent.

(30) Priority : 16.07.84 US 631134

(43) Date of publication of application :
05.02.86 Bulletin 86/06

(45) Publication of the grant of the patent :
10.02.88 Bulletin 88/06

(84) Designated contracting states :
AT BE CH DE FR GB IT LI LU NL SE

(56) References cited :
DE-A- 3 125 006
US-A- 2 824 002
US-A- 3 386 834
US-A- 3 810 772
ABSTRACTS BULLETIN OF THE INSTITUTE OF
PAPER CHEMISTRY, vol. 54, no. 4, October 1983,
page 417, no. 3794, Appleton, Wisconsin, US;
R.C.YOUNG: "Fluorochemical additives for paper
and board specialties" & INNOVATION PAPER IND.
CORPORATE EXEC. CONF. (VENICE) PROC.: 108-111
(MAY 1980)

(73) Proprietor : GENERAL FOODS CORPORATION
250 North Street
White Plains, N.Y. 10625 (US)

(72) Inventor : Yadlowsky, Slawko
308, North Avenue
Manville New Jersey 08835 (US)

(74) Representative : Baillie, Iain Cameron et al
c/o Ladas & Parry Isartorplatz 5
D-8000 München 2 (DE)

EP 0 170 461 B1

## Description

This invention relates to the preparation of an improved aqueous food extract such as a coffee, tea or vegetable extract, in a filter device suitable for percolation, steeping, or other brewing technique. More particularly, this invention pertains to treating the filter device such as an infusion bag so as to permit a fuller extraction of flavor oils and aromas into the food extract, thereby yielding an extract of better quality having a more full-bodied taste.

The prior art has recognized the many advantages to consumers of placing food products in disposable infusion bags or brewing cartridges, such as greater convenience and improved brew consistency. The art is replete with examples of infusion bag and brewing cartridge designs, dating back to as early as 1899 when Henry M. Humphrey disclosed a new and improved percolator-package in U.S. Patent No. 634 349.

More recently, U.S. Patent No. 3 183 096 to Hiscock discloses a taste-free coffee packet made of a porous synthetic fiber paper of single filament polymeric fibers. Hiscock teaches a packet which would not adversely impact the flavor and aroma of coffee by absorption, adsorption, and/or polymerization of coffee compounds. Hiscock theorizes the coffee flavor compounds to be among the group of hydrogen sulfide, isoprene, methyl mercaptan, acetaldehyde, dimethylsulfide, methyl formate, furan, propionaldehyde, isobutyraldehyde, acetone, methyl furan, butyraldehyde, methyl ethyl ketone, isovaleraldehyde, methyl alcohol, diacetyl, ethyl alcohol and acetyl propionyl. It is evident from Hiscock's above-cited grouping that it was not contemplated nor recognized that flavor oils would be important to the aqueous brew quality, nor did his invention, in fact, provide for a fuller extraction of flavor oils into the brew.

Einstman et al. in U.S. Pat. No. 3 879 565 teach a system wherein roasted and ground coffee is treated with a silicone defoaming agent prior to its introduction to a brewing bag. This silicone treatment is intended to disperse the foam generated during extraction and thus improve the rate of coffee solids extraction. Similarly, silicone was employed in U.S. Pat. No. 3 386 834 to Noiset et al. as a water repellent on the surface of infusion bags, thus allowing improved gas-release from within the infusion bag.

In the Abstracts Bulletin of the Institute of Paper Chemistry, vol. 54, no. 4, October 1983, page 417, no 3794, Appleton, Wisconsin, U.S.A., R.C. Young describes the treatment of packaging material including non woven fabrics with fluorochemicals, especially for products containing fats or oils. The resulting material would be a barrier material and not a porous material suitable for an infusion bag.

The present invention teaches an improvement in the quality of an aqueous brew which is produced by extraction of a food product contained in a filter bag or other brewing device which goes far beyond the prior art. The use of filter bag materials such as natural fibers as disclosed in the prior art, has been found by the present invention to sorb to a large degree the flavour oils of the extractable food product and not completely release said flavor oils to the brew during extraction. These flavor oils contain important flavor compounds which are naturally partitioned from the food product at such levels as to provide a balanced flavor when fully extracted to the aqueous brew. Thus, the inability of the extracting medium to transfer to the aqueous food extract all said naturally partitioned flavor oils results in a brew of inferior quality.

## Summary of the invention

It has been found that an aqueous food extract of improved quality is produced by treating a filter bag material with a water-soluble, fluoro-chemical, sizing agent to prevent sorption of flavor oils by the filter bag material, and thus enable extraction of the flavor oils into the brew during brew preparation. According to the present invention, an infusion bag material may be variously treated with a fluoro-chemical sizing agent to achieve the desired result, as for example by addition of the sizing agent during production of the infusion bag material, application of the sizing agent onto the infusion bag material as by spray plating and curing, or application of the sizing agent to the infusion bag after the food product is enclosed therein.

It has further been found that the present invention results in a desirable increase in the rate of food solids extraction. This is attributable to the fact that the porosity of the infusion bag material is not diminished by sorption of flavor oils, thereby not impeding the flow of extracted food solids.

## Detailed description of the invention

The present invention has applicability to any brewing apparatus that is known in the art for preparation of a food extract. Particularly suitable applications include treatment of infusion bags used for coffee or tea brew preparations, percolator packages such as described in U.S. Pat. No. 3 511 666, and single service food preparation packages such as disclosed in U.S. Pat. No. 4 426 919. The food product may be entirely enclosed within the infusion bag material or discontinuously sealed within said infusion material as disclosed in U.S. Pat. No. 3 888 999. Enclosure of the food product may be accomplished by heat sealing the infusion bag material as by the use of heat sealable binders and/or heat sealable fibers or films, or stitched, or any other method as is known in the art.

The present invention is equally applicable to food materials that are loosely packaged or compressed, either fully or partially, into tablet-type form prior to packaging within the infusion bag material. Processing steps which are known in the art to aid in the efficiency of an extraction of soluble solids, such as grinding, flaking, or degassing are suitable prior to packaging in the infusion bag material. A compression of the food product may be desirable in instances where the infusion bag material porosity is such that a dusting of the exterior of the infusion bag material with the finer food particles result during shipment or handling of the infusion bag. For example, a critical pressure of between (8,000 to 16,000 psi) $5.52 \times 10^4$ to $11.03 \times 10^4$ k Pa is disclosed in the prior art for compression of roast and ground coffee to avoid « dusting », yet not disrupt the coffee particles to the extent that coffee lipids are expressed therefrom. The choice as to whether the food product is compressed prior to being packaged is one that is easily made by one skilled in the art.

The infusion bag material which is used to enclose the food product can be made of any non-toxic, relatively tasteless or bland, insoluble material. Any natural material having sufficient porosity for extraction can be used in conjunction with the fluoro-chemical sizing agent, particularly a natural fiber material such as cotton gauze. The infusion bag material should have sufficient porosity to allow substantial extraction of the food material but insufficient to allow migration of the food material from inside the infusion bag, especially during extraction when swelling of the food material is common upon contact with the hot extracting water. For example, in a case when closely packaged roast and ground coffee is being extracted in an infusion bag, pores ranging in diameter from (0.01″ to 0.1″) .254 mm to 2.54 mm and preferably from (0.03″ to 0.07″) .762 mm to 1.79 mm is suitable for unimpeded extraction, while retaining nearly all of the roast and ground coffee in the infusion bag.

The infusion bag material is treated with a water-soluble, fluoro-chemical, sizing agent according to the invention in a way and at such a level that flavor oils from the food product are prevented from sorbing in or on the infusion bag material. Said treatment may be accomplished by addition of the fluoro-chemical sizing agent as a liquid suspension or emulsion during the infusion bag stock preparation, by application to the infusion bag surface, or by addition to a coating which is subsequently applied to the infusion bag, or any other method which would be evident to one skilled in the art.

Addition of a fluoro-chemical sizing agent internally during infusion bag stock preparation is viewed as advantageous because a more uniform distribution of the sizing agent throughout the infusion bag material is produced, which results in a material which is able to withstand physical abuse with less degradation than would result in a case of surface treatment. It has been found that in order to internally bond a fluoro-chemical sizing agent, which is an anionic material, to anionic infusion bag materials, the addition of cationic retention aids is necessary. Generally, a cationic retention aid is added to the stock suspension, commonly referred to in the art as « furnish », at a level of from about 0.7 to 1.2 % cationic retention aid to dry furnish by weight. A fluoro-chemical sizing agent is subsequently added to the furnish at a level ranging from about 0.05 to 0.6 % fluoro-chemical sizing agent to dry furnish, and typically from about 0.1 to about 0.3 % fluoro-chemical sizing agent to dry furnish by weight.

In order that the fluoro-chemical sizing agent be more uniformly distributed throughout the infusion bag material, it may be desirable to initially add a low molecular weight cationic retention aid, and later in the stock preparation process add a high molecular weight retention aid. Said combination of cationic retention aids is effective in overcoming a disproportionate bonding of fluoro-chemical sizing agent compounds to the more electrostatically charged fine fibers than to the lesser charged long fibers. Generally, low molecular weight retention aids are added at a level ten to fifteen times that of high molecular weight aids by weight, to effect an even distribution of the fluoro-chemical sizing agent.

Application of a fluoro-chemical sizing agent to an infusion bag surface may be accomplished at many points in the manufacturing process, as for example in converting operations using glue stations, printing stations or any of several coating stations. Typically, said application is achieved by immersing an infusion bag material in an aqueous solution of the sizing agent for a period of from 30 seconds to 10 minutes and preferably from 1 to 5 minutes. The treated paper is then pressed and cured to an end temperature ranging from 200 °F (93 °C) to 400 °F (204 °C) and preferably from 300 °F (149 °C) to 350 °F (177 °C). Curing may be accomplished in any suitable drier such as a photo sheet drier. Generally, treatment levels range from about 0.05 to about 0.6 % fluoro-chemical sizing agent to infusion bag material by weight, and typically from about 0.1 to 0.3 %. In cases where the fluoro-chemical sizing agent is to be applied in a solution, typically the fluoro-chemical sizing agent is maintained at a concentration of from about 20 % to 50 % by weight of said solution, and preferably from 25 % to 35 % by weight, and it may be desirable to add a wetting agent such as n-butyl alcohol to maximize solution penetration. Further, a defoaming agent may be effectively employed to limit or eliminate foam development during processing. The use of such additional additives will become apparent to those skilled in the art.

The application of a fluoro-chemical sizing agent to an infusion bag material according to the present invention does not provide increased water repellent characteristics to the infusion bag substrate. If water repellancy is desired, silicone compounds such as are disclosed in U.S. Pat. No. 3 386 834 may be employed in conjunction with the fluoro-chemical sizing agent to achieve an increased water repellancy.

The present invention has application to any food product that may be enclosed within an infusion bag type material and extracted with a liquid stream to produce an extracted product. For example, the invention may be used as a treatment process for infusion bags which are subsequently filled with tea leaves or roast and ground coffee, thus increasing the desirable extraction of flavor oils to the aqueous brew. Alternatively, percolator packages may be treated with a fluoro-chemical sizing agent according to the invention, then filled with roast and ground coffee, and used by consumers in a standard commercial brewing apparatus to produce a more flavorful brew.

Example

A paper, Dexter* 3968 grade (a product of Dexter Co., Windsor Locks, Ct.), having a porosity of (395 CFM/Ft$^2$) 36.74/m$^2$ was treated with a fluoro-chemical sizing agent, Scotchban* (a product of 3M, St. Paul, Minn.), at levels of 0.1 and 0.3 % Scotchban* to Dexter paper by weight. Said papers were treated as (8" by 11") 20.32 cm by 27.94 cm swatches by immersion in a 33 % aqueous solution by weight of FC-807 Scotchban*. Treatment was for a period of 1 minute, at which time the treated paper was passed through a sizing press and then cured in a photo sheet drier to an end temperature of (325 °F) 163 °C. Said paper was found to be 100 % treated with the sizing agent, i. e., 100 % of the paper fibers were coated.

A sample of treated paper and a sample of control (without Scotchban*) paper were formed into infusion bags and filled with 6 grams of roast and ground coffee. An expert evaluation of the roast and ground coffee brews at 1 % coffee solids by weight, produced by extracting the samples with 8 oz of water at 185 °C, found the control brew to be of poorer quality and lacking the full-bodied coffee notes of the brew produced according to the present invention.

* Dexter and Scotchban are trade marks which may be registered in certain of the designated countries.

**Claims**

1. A process for making a brewing packet, characterised by treating an infusion bag material with a water-soluble fluoro-chemical sizing agent which will prevent sorption of flavor oils by the infusion bag material and which sizing agent will not diminish the porosity of the infusion bag material, and packaging a food product within said treated infusion bag material to form a brewing packet.

2. A process according to claim 1 in which said infusion bag material is made of a non-toxic, relatively tasteless, insoluble material which is a natural fiber or a synthetic polymeric material.

3. A process according to claim 2 in which the polymeric material is a woven or non-woven fiber made of a polymeric material such as viscose rayon, nylon, polyesters or acrylics.

4. A process according to any one of claims 1 to 3 in which said fluoro-chemical sizing agent is Scotchban.

5. A process according to any one of claims 1 to 4 in which said infusion bag material has incorporated therewith from 0.05 to 0.6 % fluoro-chemical sizing agent to infusion bag material by weight.

6. A process according to any one claims 1 to 5 in which said incorporation is by the addition of a fluoro-chemical sizing agent to the infusion bag material during stock preparation, to the infusion bag surface, or into a coating which is subsequently applied to the infusion bag material.

7. A process according to claim 6 in which said fluoro-chemical sizing agent is in a suspension or emulsion.

8. A process according to claim 7 in which the suspension or emulsion contains a defoaming agent.

9. A process according to either of claims 7 and 8 in which the fluoro-chemical sizing agent is present in said suspension or emulsion at a concentration of from 20 % to 50 % by weight.

10. A process according to any one of claims 6 to 9 in which said addition of a fluoro-chemical sizing agent to the infusion bag material during stock preparation further comprises addition of a cationic retention aid.

11. A process according to claim 10 in which said cationic retention aid is a combination of a high molecular weight and a low molecular weight cationic retention aid.

12. A process according to claim 10 in which said cationic retention aid is added at a level of from 0.7 to 1.2 % cationic retention aid to infusion bag material by weight.

13. A process according to any one of claims 1 to 12 in which said food product is roast and ground coffee or tea.

14. A process according to any one of claims 1 to 13 in which said infusion bag is a percolator package.

15. A brewing packet comprising a food product encompassed by a porous infusion bag material characterised in that a water-soluble fluoro-chemical sizing agent is incorporated into said material.

**Patentansprüche**

1. Verfahren zum Herstellen eines Aufgußbeutels, dadurch gekennzeichnet, daß ein Aufgußbeutelmaterial mit einem wasserlöslichen fluorchemischen Schlichtmittel behandelt wird, das eine Sorption von öligen Geruchs- und/oder Geschmackstoffen durch das Aufgußbeutelmaterial verhindert und das die Porosität des Aufgußbeutelmaterials nicht vermindert, und daß zum Herstellen eines Aufgußbeutels ein Lebensmittelprodukt in dem behandelten Aufgußbeutelmaterial verpackt wird.

2. Verfahren nach Anspruch 1, dadurch gekennzeichnet, daß das Aufgußbeutelmaterial aus einem nichttoxischen, relativ geschmacklosen, unlöslichen Material hergestellt wird, das aus Naturfasern oder aus einem synthetischen polymeren Material besteht.

3. Verfahren nach Anspruch 2, dadurch gekennzeichnet, daß das polymere Material ein aus Fasern bestehendes Gewebe oder ein Faservlies ist, das aus einem polymeren Material, wie Viskosefilamentgarn, Nylon, Polyester oder Acrylharz besteht.

4. Verfahren nach einem der Ansprüche 1 bis 3, dadurch gekennzeichnet, daß das fluorchemische Schlichtmittel Scotchban ist.

5. Verfahren nach einem der Ansprüche 1, dadurch gekennzeichnet, daß das Aufgußbeutelmaterial auf dessen Gewicht bezogen 0,05 bis 0,6 % fluorchemisches Schlichtmittel enthält.

6. Verfahren nach einem der Ansprüche 1 bis 5, dadurch gekennzeichnet, daß während der Herstellung des Aufgußbeutelmaterials diesem ein fluorchemisches Schlichtmittel zugesetzt wird, das auf die Oberflächenbeutelfläche aufgegeben oder in ein Überzugsmaterial eingebracht wird, das danach auf das Aufgrußbeutelmaterial aufgetragen wird.

7. Verfahren nach Anspruch 1, dadurch gekennzeichnet, daß das fluorchemische Schlichtmittel in Form einer Suspension oder einer Emulsion verwendet wird.

8. Verfahren nach Anspruch 7, dadurch gekennzeichnet, daß die Suspension oder Emulsion ein Antischaummittel enthält.

9. Verfahren nach Anspruch 7 oder 8, dadurch gekennzeichnet, daß das fluorchemische Schlichtmittel in der Suspension oder Emulsion in einer Konzentration von 20 bis 30 Gew.% enthalten ist.

10. Verfahren nach einem der Ansprüche 6 bis 9, dadurch gekennzeichnet, daß bei dem Zusatz des fluorchemischen Schlichtmittels zu dem Aufgußbeutelmaterial während dessen Herstellung ferner ein kationisches Retentionsmittel zugesetzt wird.

11. Verfahren nach Anspruch 1, dadurch gekennzeichnet, daß das kationische Retentionsmittel eine Kombination mit hohem bzw. niedrigem Molekulargewicht ist.

12. Verfahren nach Anspruch 10, dadurch gekennzeichnet, daß das kationische Retentionsmittel in einer auf das Gewicht des Aufgußbeutelmaterials bezogenen Menge von 0,7 bis 1,2 % zugesetzt wird.

13. Verfahren nach einem der Ansprüche 1 bis 12, dadurch gekennzeichnet, daß das Lebensmittelprodukt gerösteter und gemahlener Kaffee oder Tee ist.

14. Verfahren nach einem der Ansprüche 1 bis 13, dadurch gekennzeichnet, daß der Aufgußbeutel ein Perkolierbeutel ist.

15. Aufgußbeutel mit einem von einem porösen Aufgußbeutelmaterial umschlossenen Lebensmittelprodukt, dadurch gekennzeichnet, daß das genannte Material eine wasserlösliches fluorchemisches Schlichtmittel enthält.

## Revendications

1. Procédé de fabrication d'un sachet pour extraction, caractérisé en ce qu'on traite une matière de sachet pour infusion par un agent d'encollage fluorochimique soluble dans l'eau, qui empêchera la sorption des huiles odoriférantes par la matière du sachet pour infusion, et lequel agent d'encollage ne réduira pas la porosité de la matière du sachet pour infusion, et en ce qu'on emballe un produit alimentaire dans cette matière de sachet pour infusion traitée pour former un sachet d'extraction.

2. Procédé suivant la revendication 1, dans lequel cette matière de sachet pour infusion est fabriquée à partir d'une matière non toxique, relativement insipide, insoluble qui est une fibre naturelle ou une matière polymère synthétique.

3. Procédé suivant la revendication 2, dans lequel la matière polymère est une fibre tissée ou non tissée fabriquée en une matière polymère telle que la rayonne, viscose, le nylon, les polyesters ou les acryliques.

4. Procédé suivant l'une quelconque des revendications 1 à 3, dans lequel cet agent d'encollage fluoro-chimique est le Scotchban.

5. Procédé suivant l'une quelconque des revendications 1 à 4, dans lequel on a incorporé à cette matière de sachet pour infusion 0,05 à 0,6 % en poids d'un agent d'encollage fluoro-chimique par rapport à la matière de sachet pour infusion.

6. Procédé suivant l'une quelconque des revendications 1 à 5, dans lequel cette incorporation s'effectue par addition d'un agent d'encollage fluoro-chimique à la matière de sachet pour infusion au cours de la préparation de la matière, sur la surface du sachet pour infusion, ou dans un revêtement qui est ultérieurement appliqué sur la matière du sachet pour infusion.

7. Procédé suivant la revendication 6, dans lequel cet agent d'encollage fluoro-chimique est en suspension ou en émulsion.

8. Procédé suivant la revendication 7, dans lequel la suspension ou émulsion contient un agent anti-mousse.

9. Procédé suivant l'une quelconque des revendications 7 et 8, dans lequel l'agent d'encollage fluoro-chimique est présent dans cette suspension ou émulsion à une concentration de 20 à 50 % en poids.

10. Procédé suivant l'une quelconque des revendications 6 à 9, dans lequel cette addition d'agent d'encollage fluoro-chimique à la matière de sachet pour infusion au cours de la préparation de la matière comprend en outre l'addition d'un agent de rétention cationique.

11. Procédé suivant la revendication 10, dans lequel cet adjuvant de rétention cationique est une combinaison d'un adjuvant de rétention cationique de masse moléculaire élevée et de masse moléculaire faible.

12. Procédé suivant la revendication 10, dans lequel cet adjuvant de rétention cationique est ajouté à un taux de 0,7 à 1,2 % en poids d'adjuvant de rétention cationique par rapport à la matière de sachet pour infusion.

13. Procédé suivant l'une quelconque des revendications 1 à 12, dans lequel ce produit alimentaire est du café torréfié et moulu ou du thé.

14. Procédé suivant l'une quelconque des revendications 1 à 13, dans lequel ce sachet pour infusion est un emballage filtrant.

15. Sachet d'extraction comprenant un produit alimentaire enveloppé dans une matière de sachet pour infusion poreuse, caractérisé en ce qu'un agent d'encollage fluoro-chimique soluble dans l'eau est incorporé à cette matière.